(19) Europäisches Patentamt
European Patent Office
Office européen des brevets

(11) EP 1 079 239 B1

(12) **FASCICULE DE BREVET EUROPEEN**

(45) Date de publication et mention de la délivrance du brevet:
**30.03.2005 Bulletin 2005/13**

(51) Int Cl.$^7$: **G01S 7/499**

(21) Numéro de dépôt: **00402363.6**

(22) Date de dépôt: **25.08.2000**

(54) **Methode et dispositif de discrimination de cible par illumination laser**

Verfahren und Anordnung zur Zieldiskriminierung mittels Laserbestrahlung

Method and device for discriminating targets by laser illumination

(84) Etats contractants désignés:
**DE FR GB IT NL**

(30) Priorité: **27.08.1999 FR 9910876**

(43) Date de publication de la demande:
**28.02.2001 Bulletin 2001/09**

(73) Titulaire: **Thales**
**75008 Paris (FR)**

(72) Inventeurs:
- **Breugnot, Sébastien,**
**Thomson-CSF Prop. Intellect.**
**94117 Arcueil Cédex (FR)**
- **Clemenceau, Philippe,**
**Thomson-CSF Prop. Intellect.**
**94117 Arcueil Cédex (FR)**

(74) Mandataire: **Brochard, Pascale**
**THALES Intellectual Property,**
**31-33,avenue Aristide Briand**
**94117 Arcueil Cedex (FR)**

(56) Documents cités:
**FR-A- 2 727 766**
**US-A- 4 643 575**
**US-A- 4 916 324**
**US-A- 5 452 089**

- **"ACTIVE IMAGERY UNDER GRAZING INCIDENCE USING POLARIZATION TO DETECTAND IDENTIFY SUBSURFACE TARGETS IMMERSED IN THE DRAUGHT ZONE" JOURNAL OF PHYSICS D. APPLIED PHYSICS,GB,IOP PUBLISHING, BRISTOL, vol. 30, no. 11, 7 juin 1997 (1997-06-07), pages 1591-1601, XP000724843 ISSN: 0022-3727**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne une méthode de discrimination d'une cible par rapport à son environnement, par illumination laser de ladite cible, ainsi qu'un dispositif de discrimination mettant en oeuvre ladite méthode. L'invention s'applique notamment à un télémètre laser à fort pouvoir de discrimination.

La discrimination d'une cible par rapport à son environnement est une fonction importante de dispositifs optroniques tels que par exemple les systèmes de détection et/ou identification de cibles ou les télémètres laser qui accompagnent la plupart des équipements optroniques. La télémétrie laser en effet permet de mesurer la distance d'une cible par mesure du temps d'aller-retour d'une onde laser, par exemple une impulsion, émise par le télémètre et rétrodiffusée par ladite cible. Il est fondamental de savoir si l'objet pointé par le télémètre est bien la cible dont on cherche à estimer la distance, et non son environnement proche, qu'il s'agisse d'un fond naturel homogène (par exemple la végétation située en arrière plan), d'un fond naturel structuré (fond naturel complexe regroupant des zones de nature différente, par exemple un ensemble de rochers, d'arbres, de végétation,...), ou encore d'un fond formé de structures fabriquées par l'homme.

Dans l'art antérieur connu, la discrimination de la cible se fait directement à l'oeil nu, ce qui devient très aléatoire dans les télémètres à grande portée. Une méthode de détection de cible plus élaborée est décrite dans le brevet US 5,452,089. Il s'agit d'envoyer une onde polarisée linéairement et d'alterner la polarisation de l'onde laser émise entre polarisation linéaire horizontale et polarisation linéaire verticale, à une fréquence détectable par l'oeil, soit environ 10 Hz. L'opérateur perçoit alors un clignotement lorsque l'onde est rétrodiffusée par une cible qui dépolarise peu la lumière. Cela permet ainsi de distinguer une cible fabriquée par l'homme d'un environnement naturel, fortement dépolarisant. Mais cette méthode est limitée à une estimation qualitative du caractère dépolarisant de certains types d'objets. Elle est donc très peu précise et ne permet en aucun cas de discriminer une cible donnée par rapport à un fond quelconque, notamment un fond structuré, ou un fond formé d'une structure fabriquée par l'homme.

La méthode de discrimination selon l'invention permet de pallier ces inconvénients. Elle est basée sur une mesure quantitative du degré de polarisation de la cible, permettant la discrimination de celle-ci par rapport à son environnement avec une très bonne précision, voire l'identification de ladite cible.

Pour cela, la méthode de discrimination selon l'invention est caractérisée en ce qu'elle comprend :

- l'émission vers ladite cible d'une onde laser polarisée (We), de polarisation elliptique, le vecteur de Stokes associé à l'onde émise étant sensiblement le suivant:

$$S = \begin{pmatrix} 1 \\ 1/\sqrt{3} \\ 1/\sqrt{3} \\ 1/\sqrt{3} \end{pmatrix}$$

  à un facteur scalaire près, et par une matrice de rotation près autour de l'axe (Oz) de propagation de l'onde,
- l'analyse selon deux axes perpendiculaires de la polarisation de ladite onde (Wr) rétrodiffusée par la cible, permettant la détection de deux intensités lumineuses $I_1$ et $I_2$ telles que le rapport $\frac{I_1 - I_2}{I_1 + I_2}$ est sensiblement égal au degré de polarisation $D_p(M)$ de ladite cible, la mesure de $D_p(M)$ permettant de discriminer la cible par rapport à son environnement.

L'invention concerne également un dispositif mettant en oeuvre une méthode de discrimination selon l'invention, caractérisé en ce qu'il comprend :

- des moyens d'émission (ME) de ladite onde polarisée (We) comprenant notamment une source laser (LAS) et un générateur d'état de polarisation (PSG),
- des moyens de réception (MR) de l'onde rétrodiffusée, comprenant notamment un analyseur d'état de polarisation (PSA) selon deux axes perpendiculaires de l'onde rétrodiffusée (Wr) et des moyens de détection (MDET), ledit analyseur donnant de l'onde rétrodiffusée deux signaux lumineux ($Wr_1$, $Wr_2$) détectés par desdits moyens de détection et d'intensités lumineuses égales auxdites intensités lumineuses $I_1$ et $I_2$,
- des moyens de traitement du signal (TS) permettant de calculer à partir desdites intensités lumineuses le degré de polarisation $D_p(M)$ de la cible.

La méthode selon l'invention, basée sur l'émission d'une onde polarisée de polarisation déterminée, est simple à mettre en oeuvre, et grâce à une détermination quantitative du degré de polarisation de la cible, elle permet de discriminer avec précision la cible de son environnement. Notamment, le dispositif selon l'invention s'intègre très facilement dans les dispositifs optroniques du type télémètre dans lesquels il permet de valider la mesure de télémétrie.

D'autres avantages et caractéristiques de l'invention apparaîtront à la lecture de la description qui suit, annexée par les figures qui représentent :

- la figure 1, par une vue synoptique, un exemple de télémètre laser comprenant un dispositif de discrimination de cible selon l'invention,
- la figure 2, un exemple de réalisation du dispositif selon l'invention, intégré dans un télémètre,
- la figure 3, une représentation schématique selon un exemple de l'allure des intensités lumineuses détectées en fonction du temps, ainsi que la mesure donnant le degré de polarisation Dp(M).

Le formalisme de STOKES-MUELLER permet de décrire l'état de polarisation d'une onde monochromatique. Ce formalisme est caractérisé par un vecteur S, dit de STOKES, composé de paramètres I, Q, U et V définis par la suite. En considérant une onde qui se propage suivant un axe Oz et un repère O, x, y, tel que les axes Ox et Oy sont perpendiculaires à l'axe Oz, le vecteur $\vec{E}$ représentant le champ électromagnétique peut être décomposé comme suit :

$$E_x(t) = E_{0x}(t)\cos[\omega t + \delta_x(t)] \quad (1)$$

$$E_y(t) = E_{0y}(t)\cos[\omega t + \delta_y(t)] \quad (2)$$

où $E_x(t)$ et $E_y(t)$ sont respectivement les composantes du vecteur $\vec{E}$ le long des axes Ox et Oy.

$\omega$ est la pulsation du champ électromagnétique, et $\delta_x(t)$ et $\delta_y(t)$ les déphasages des composantes $E_x(t)$ et $E_y(t)$. Les composantes du vecteur S de STOKES-MUELLER sont définies par les relations suivantes :

$$I = E_{0x}^2 + E_{0y}^2 \quad (3)$$

$$Q = E_{0x}^2 - E_{0y}^2 \quad (4)$$

$$U = 2E_{0x}E_{0y}\cos\delta \quad (5)$$

$$V = 2E_{0x}E_{0y}\sin\delta \quad (6)$$

$\delta = \delta_x(t) - \delta_y(t)$ étant la différence de phase entre les deux composantes $E_x(t)$ et $E_y(t)$ du champ.

Les composantes I, Q, U, V forment les paramètres, dits de STOKES, de l'onde émise vers la cible que l'on veut pointer.

La matrice M de MUELLER d'une cible en rétrodiffusion permet d'exprimer le vecteur Sr de STOKES rétrodiffusé par la cible en fonction du vecteur S de STOKES incident, soit :

$$Sr = M.S \quad (7)$$

Le degré de polarisation $D_p(M)$ de la matrice M est défini selon la relation suivante, où $m_{ij}$ représente un élément de cette matrice $4\times4$ :

$$D_p(M) = 100.\sqrt{\frac{\sum_{i=0}^{i=3}\sum_{j=0}^{j=3} m_{ij}^2 - m_{00}^2}{3.m_{00}^2}} \qquad (8)$$

$D_p(M)$ est une caractéristique du matériau de la cible. $D_p(M) = 0\%$ signifie notamment que le matériau dont est constituée la cible dépolarise totalement l'onde incidente et que l'onde rétrodiffusée est totalement dépolarisée, c'est-à-dire que les phases des composantes du champ rétrodiffusé sont devenues totalement incohérentes. Un exemple d'onde totalement dépolarisée est la lumière naturelle.

$D_p(M) = 100\%$ signifie que l'onde rétrodiffusée est polarisée, c'est-à-dire que les phases du champ rétrodiffusé sont totalement cohérentes.

$D_p(M) < 100\%$ signifie que l'onde rétrodiffusée est partiellement polarisée, c'est-à-dire qu'elle serait la somme d'une lumière dépolarisée et d'une vibration elliptique. En fait $D_p(M)$ représente le taux de lumière polarisée de l'onde rétrodiffusée.

Le degré de polarisation $D_p(M)$ dépend donc de la nature de la cible sur laquelle est rétrodiffusée l'onde émise. La mesure de ce paramètre permet donc de distinguer une cible de son environnement avec une grande précision.

La méthode de discrimination d'une cible par rapport à son environnement est basée sur la mesure du degré de polarisation $D_p(M)$ de ladite cible. Elle comprend l'émission vers la cible d'une onde laser polarisée, de polarisation elliptique judicieusement choisie, dont la forme du vecteur de Stokes S associé sera précisée par la suite. L'onde laser est rétrodiffusée par la cible, et le vecteur de Stokes Sr associé à l'onde rétrodiffusée est donné, selon l'équation (7), par

$$Sr = M.S,$$

où M est la matrice de Mueller de ladite cible.

Selon la méthode selon l'invention, la polarisation de l'onde rétrodiffusée est analysée selon deux axes perpendiculaires, et le choix de la polarisation de l'onde émise, ainsi que le choix des moyens d'analyse de la polarisation de l'onde rétrodiffusée permettent la détection de deux intensités lumineuses $I_1$ et $I_2$ telles que le rapport $\frac{I_1 - I_2}{I_1 + I_2}$ est sensiblement égal au degré de polarisation $D_p(M)$ de ladite cible. Ces choix seront précisés ultérieurement.

La discrimination de la cible par rapport à son environnement peut alors être faite de la manière suivante. La valeur de $D_p(M)$ est par exemple comparée à une ou plusieurs valeurs prédéterminées, permettant de distinguer la cible de certains types de fond dont les degrés de polarisation sont connus. Ainsi, par exemple, les degrés de polarisation des fonds naturels sont généralement inférieurs à 30%. Une valeur du degré de polarisation $D_p(M)$ de la cible mesurée au-dessus de cette valeur permettra ainsi de distinguer la cible de son environnement naturel. Selon un autre exemple, la valeur du degré de polarisation Dp est comparée à un ensemble de valeurs de degrés de polarisation d'objets connus, ce qui permet d'aider à l'identification de la cible. La méthode selon l'invention confère ainsi une grande précision dans la discrimination de la cible par rapport à son environnement, cette précision étant par exemple nécessaire dans les systèmes optroniques nécessitant le pointage de la cible par laser.

La précision de la méthode selon l'invention est due notamment au fait qu'il n'est nécessaire d'envoyer qu'une seule onde de polarisation déterminée pour effectuer la mesure. Cela permet ainsi de travailler par exemple avec une source laser impulsionnelle, la mesure du degré de polarisation pouvant être faite sur chaque impulsion. Il n'est donc pas nécessaire, pour obtenir une mesure du degré de polarisation, d'envoyer plusieurs impulsions de polarisation différente, ce qui pourrait générer une erreur sur la mesure du degré de polarisation, du fait que les caractéristiques en terme d'énergie, de largeur d'impulsion ou de divergence par exemple, peuvent changer sensiblement d'une impulsion à l'autre. Nous verrons par la suite d'autres avantages liés à l'émission d'une seule onde polarisée.

Dans l'application de la télémétrie par exemple, pour laquelle l'utilisation d'une source laser impulsionnelle de forte énergie permet d'opérer des mesures de distance avec une grande portée, la méthode selon l'invention est donc particulièrement intéressante. Dans un télémètre muni d'une telle fonction, on pourra par exemple, en fonction de la mesure du degré de polarisation de l'objet pointé, décider s'il est nécessaire ou non de repointer le télémètre.

Nous expliquons maintenant le choix effectué dans la polarisation de l'onde émise ainsi que l'analyse de l'onde rétrodiffusée qui en est faite.

La déposante a remarqué que les matrices de Mueller des objets composant les scènes de l'entourage quotidien sont considérés comme étant diagonales.

A titre d'exemple, des matrices de MUELLER Mp et Mb correspondant respectivement à de la peinture et à du béton sont les suivantes :

$$Mp = \begin{bmatrix} 1 & -0.05 & -0.06 & -0.02 \\ -0.03 & 0.65 & 0 & 0.03 \\ -0.04 & 0.03 & 0.63 & -0.01 \\ -0.02 & 0 & 0 & 0.6 \end{bmatrix}$$

$$Mb = \begin{bmatrix} 1 & -0.02 & -0.01 & 0.03 \\ -0.01 & 0.18 & -0.04 & 0.02 \\ 0.02 & 0.03 & 0.17 & 0 \\ 0.01 & -0.01 & 0 & 0.12 \end{bmatrix}$$

Les éléments non diagonaux des matrices sont très inférieurs aux éléments diagonaux. Ils sont sensiblement égaux à l'incertitude et peuvent être interprétés comme du bruit de mesure. La matrice M de MUELLER est donc considérée, pour un objet commun, comme ayant la forme suivante :

$$M = \begin{bmatrix} M_{00} & 0 & 0 & 0 \\ 0 & M_{11} & 0 & 0 \\ 0 & 0 & M_{22} & 0 \\ 0 & 0 & 0 & M_{33} \end{bmatrix}$$

De plus, en faisant comme hypothèse supplémentaire que l'objet possède une symétrie circulaire , c'est-à-dire en considérant que la matrice de MUELLER est la même si l'objet est tourné selon l'axe défini par le faisceau incident, perpendiculaire aux composantes $E_x$ et $E_y$ du champ, il vient que cette matrice M commute avec toute matrice de rotation autour de l'axe précité. Il s'ensuit alors que seuls trois éléments diagonaux sont libres, c'est-à-dire que deux sont égaux. Ces trois éléments sont :

- $M_{00}$ qui est le coefficient de réflexion de l'objet cible ;
- $M_{11} = M_{22}$ qui est le coefficient de dépolarisation linéaire ;
- $M_{33}$ qui est le coefficient de dépolarisation circulaire.

La matrice M a alors la forme suivante :

$$M = \begin{bmatrix} M_{00} & 0 & 0 & 0 \\ 0 & M_{11} & 0 & 0 \\ 0 & 0 & M_{11} & 0 \\ 0 & 0 & 0 & M_{33} \end{bmatrix}$$

et son degré de polarisation Dp est donné par la relation suivante :

$$D_p = (2M_{11} + M_{33}) / 3M_{00} \qquad (9)$$

La déposante a déterminé que l'envoi d'une seule onde polarisée, de polarisation elliptique déterminée, permet de déterminer le degré de polarisation tel qu'il est défini par l'équation (9). Le vecteur de Stokes S associé à ladite onde a la forme générale suivante :

$$S = \begin{pmatrix} 1 \\ 1/\sqrt{3} \\ 1/\sqrt{3} \\ 1/\sqrt{3} \end{pmatrix} \qquad (10)$$

à un facteur scalaire près, et par une matrice de rotation près autour de l'axe (Oz) de propagation de l'onde.

Dans ce cas en effet, le vecteur de Stokes Sr associé à l'onde rétrodiffusée est, pour une onde émise dont le vecteur de Stokes associé est donné par l'équation (10):

$$Sr = \begin{pmatrix} M_{00} \\ M_{11}/\sqrt{3} \\ M_{11}/\sqrt{3} \\ M_{33}/\sqrt{3} \end{pmatrix}$$

L'analyse de la polarisation de l'onde rétrodiffusée est alors réalisée (selon des moyens décrits par la suite) de telle sorte que les intensité $I_1$ et $I_2$ sortant de ce système soient en fait, à un produit scalaire près, les produits scalaires du vecteur de stokes Sr avec les vecteurs $V_1$ et $V_2$ suivants:

$$V_1 = \begin{pmatrix} 1 \\ 1/\sqrt{3} \\ 1/\sqrt{3} \\ 1/\sqrt{3} \end{pmatrix} \text{et } V_2 = \begin{pmatrix} 1 \\ -1/\sqrt{3} \\ -1/\sqrt{3} \\ -1/\sqrt{3} \end{pmatrix}$$

Ainsi, les intensités lumineuses précitées sont données par :

$$I_1 = M_{00} + 1/3(2\ M_{11} + M_{33}) \qquad (11)$$

$$I_2 = M_{00} - 1/3(2\,M_{11} + M_{33}) \quad (12)$$

On vérifie bien alors que :

$$D_p(M) = (2M_{11} + M_{33}) / 3M_{00} = (I_1 - I_2) / (I_1 + I_2) \quad (13)$$

Plus généralement, une onde laser étant émise, de vecteur de Stokes associé

$$S = \begin{pmatrix} a_1 \\ a_2 \\ a_3 \\ a_4 \end{pmatrix},$$

l'analyse de la polarisation de l'onde rétrodiffusée peut être réalisée de telle sorte que les intensités lumineuses $I_1$ et $I_2$ soient respectivement, à un facteur scalaire près, les produits scalaires avec le vecteur de Stokes Sr de l'onde rétrodiffusée, des vecteurs $V_1$ et $V_2$ suivants :

$$V_1 = \begin{pmatrix} a_1 \\ a_2 \\ a_3 \\ a_4 \end{pmatrix} \text{et } V_2 = \begin{pmatrix} a_1 \\ -a_2 \\ -a_3 \\ -a_4 \end{pmatrix} \quad (14)$$

De cette sorte, les mesures des intensités $I_1$ et $I_2$ permettent de calculer le degré de polarisation $D_p$ de la cible.

La figure 1 présente, par une vue synoptique, un exemple de dispositif de discrimination de cible selon l'invention. Ce dispositif s'intègre par exemple dans un télémètre laser, dans un dispositif de détection et/ou d'identification de cible, ou dans tout équipement optronique dans lequel il est par exemple nécessaire d'effectuer un pointage de la cible avec une bonne capacité de discrimination de celle-ci par rapport à son environnement.

Selon l'invention, le dispositif comprend des moyens d'émission ME (voir figure 1), d'une onde We polarisée elliptiquement, le vecteur de Stokes S associé à ladite onde étant donné par l'équation (10). L'onde We est émise vers une cible CIB. Les moyens d'émission comprennent notamment une source laser LAS, par exemple une source impulsionnelle, et un générateur d'état de polarisation PSG permettant de générer la polarisation voulue. Le dispositif comprend d'autre part des moyens de réception MR de l'onde Wr rétrodiffusée par la cible. Ces moyens comportent notamment un analyseur d'état de polarisation PSA selon deux axes perpendiculaires de ladite onde et des moyens de détection MDET. L'analyseur donne de l'onde rétrodiffusée Wr deux signaux lumineux $Wr_1$ et $Wr_2$, détectés par lesdits moyens de détection, et d'intensités lumineuses $I_1$ et $I_2$, telles qu'elles sont définies respectivement par les équations 11 et 12. Le dispositif selon l'invention comprend en outre des moyens de traitement du signal TS, permettant notamment de calculer le degré de polarisation $D_p(M)$ de la cible, comme cela a été décrit précédemment. Avantageusement, les moyens de détection sont de type photodiode, ces détecteurs présentant une grande dynamique, ce qui confère à la mesure une plus grande précision.

La figure 2 décrit plus précisément un exemple de réalisation du dispositif selon l'invention, intégré dans un télémètre. Le télémètre comporte selon cet exemple des moyens d'émission ME et des moyens de réception MR distincts (configuration bistatique), chacun de ces moyens pouvant comporter respectivement une optique d'émission (non représentée) et une optique de réception (OBJ). Il serait bien sûr possible d'envisager une configuration monostatique, dans laquelle l'optique d'émission et l'optique de réception sont confondues.

Les moyens d'émission sont confondus avec les moyens d'émission du dispositif de discrimination de cible selon l'invention. La source laser LAS est avantageusement une source impulsionnelle, conférant une grande portée au télémètre, mais le télémètre équipé du dispositif selon l'invention pourrait également fonctionner avec une source laser continue, par exemple une source modulée en amplitude. De manière classique, le télémètre comporte également

un détecteur $DET_3$, par exemple une photodiode, recevant une fraction de l'onde émise par la source laser LAS, permettant de repérer l'instant d'émission de l'impulsion dans le cas d'une source impulsionnelle.

Selon ce mode de réalisation, le générateur d'état de polarisation PSG comprend un polariseur POL et une lame d'onde $LO_e$. Le polariseur permet de polariser linéairement l'onde émise par la source laser selon un axe (Oy) donné, compris dans un plan perpendiculaire à l'axe (Oz) de propagation de l'onde, et la lame d'onde $LO_e$ est selon cet exemple une lame à retard de type lambda/8 dont l'axe rapide fait sensiblement un angle de -27,8° avec ledit axe (Oy), le sens positif étant le sens trigonométrique. Le vecteur de Stokes de l'onde We polarisée est alors de la forme générale donnée par l'équation (10).

Les moyens de réception MR du télémètre, confondus avec ceux du dispositif de discrimination selon l'invention, comprennent un analyseur d'état de polarisation PSA. Selon cet exemple de réalisation, l'analyseur PSA comprend une lame d'onde $Lo_r$, qui est une lame à retard de type lambda/8 dont l'axe rapide fait sensiblement un angle de 62,5° avec ledit axe (Oy), le sens positif étant le sens trigonométrique. L'analyseur PSA comprend également des moyens de séparation de la polarisation, permettant de générer les signaux lumineux $Wr_1$ et $Wr_2$ qui forment ici deux ondes polarisées linéairement, respectivement selon les axes Oy et Ox perpendiculaire à Oy. Les signaux $Wr_1$ et $Wr_2$ sont envoyés vers les moyens de détection afin de détecter les intensités $I_1$ et $I_2$, qui sont sensiblement égales, à un facteur près, aux produits scalaires du vecteur de Stokes Sr de l'onde rétrodiffusée avec les vecteurs donnés par l'équation (14). Les intensités lumineuses $I_1$ et $I_2$ vérifient ainsi la relation (13) permettant la mesure du degré de polarisation $D_p(M)$ de la cible.

Dans l'exemple de la figure 2, les moyens de détection comprennent deux détecteurs $DET_1$ et $DET_2$, et les moyens de séparation de l'analyseur de polarisation (PSA) comprennent un cube séparateur de polarisation CSP, permettant d'envoyer vers les deux détecteurs les deux ondes polarisées linéairement $Wr_1$ et $Wr_2$. Selon un autre exemple, les moyens de détection peuvent ne comporter qu'un seul détecteur. Dans ce cas, les moyens de séparation de l'analyseur PSA sont par exemple formés d'une cellule à cristal liquide commandée en tension pour envoyer successivement une polarisation rectiligne selon Oy ou selon Ox, suivant la tension fournie, associée à un polariseur d'axe Oy. Le détecteur détecte alors successivement les signaux $Wr_1$ et $Wr_2$, d'intensités respectives $I_1$ et $I_2$. Cette dernière configuration peut être intéressante par exemple dans le cas d'une onde laser continue, modulée en amplitude, et donc moins soumise à des variations aléatoires de puissance qu'une onde impulsionnelle. Ici, la cellule à cristal liquide est positionnée sur la voie de réception, et n'est donc pas soumise à de trop fortes intensités lumineuses susceptibles de l'endommager.

Dans l'exemple de la figure 2, les moyens de traitement du signal TS reçoivent les intensités lumineuses $I_1$ et $I_2$ issus des détecteurs $DET_1$ et $DET_2$, ainsi que le signal $I_3$ issu du détecteur $DET_3$. Ils permettent alors de mesurer simultanément le degré de polarisation de la cible et la distance d de la cible au télémètre.

La figure 3 représente schématiquement selon un exemple l'allure des intensités $I_1$, $I_2$, $I_3$ en fonction du temps. Ces courbes sont données en unités arbitraires u.a. Dans cet exemple, le télémètre émet une impulsion détectée à l'émission par le détecteur $DET_3$. La distance d de la cible au télémètre est alors mesurée classiquement grâce au temps $\tau$ d'aller-retour de l'impulsion, correspondant à l'intervalle de temps qui sépare la détection par le détecteur $DET_3$ de l'impulsion émise, et la détection de l'onde rétrodiffusée, simultanément par les détecteurs $DET_1$ et $DET_2$. Sur cette même figure 3, est représentée en fonction du temps la valeur du rapport $\frac{I_1 - I_2}{I_1 + I_2}$ qui donne sensiblement le degré de polarisation $D_p(M)$ de la cible. Selon un exemple de mise en oeuvre de la méthode de discrimination selon l'invention, si cette valeur est supérieure à une valeur prédéterminée, par exemple 30% (car le degré de polarisation du fond naturel est inférieur à 30%), la mesure de télémétrie est confirmée. Dans le cas contraire, un repointage du télémètre est nécessaire afin d'illuminer la cible.

Selon un exemple de réalisation, la source peut être un laser à Erbium, émettant à une longueur d'onde de 1,5 µm (longueur d'onde dite à sécurité oculaire), de durée d'impulsion 10 ns et de puissance crête 10 kW. Les détecteurs considérés sont par exemple des photodiodes en InGaAs. En considérant que les détecteurs $DET_1$ et $DET_2$ ont une sensibilité d'environ 15 nW, la portée du télémètre est alors d'environ 1500 m. La précision de la mesure de $D_p$ (M) est alors inférieur à 1%.

Cet exemple permet notamment de montrer la facilité de mise en oeuvre du dispositif de discrimination de cible sur un système de pointage de cible existant, par exemple de type télémètre, en lui faisant subir que quelques modifications, lui conférant alors un fort pouvoir de discrimination.

## Revendications

1. Méthode de discrimination d'une cible par rapport à son environnement, **caractérisée en ce qu'**elle comprend

- l'émission vers ladite cible d'une onde laser polarisée (We), de polarisation elliptique, le vecteur de Stokes associé à l'onde émise étant sensiblement le suivant:

$$S = \begin{pmatrix} 1 \\ 1/\sqrt{3} \\ 1/\sqrt{3} \\ 1/\sqrt{3} \end{pmatrix}$$

à un facteur scalaire près, et par une matrice de rotation près autour de l'axe (Oz) de propagation de l'onde,

- l'analyse selon deux axes perpendiculaires de la polarisation de ladite onde (Wr) rétrodiffusée par la cible, permettant la détection de deux intensités lumineuses $I_1$ et $I_2$ telles que le rapport $\frac{I_1 - I_2}{I_1 + I_2}$ est sensiblement égal au degré de polarisation $D_p(M)$ de ladite cible, la mesure de $D_p(M)$ permettant de discriminer la cible par rapport à son environnement.

2. Méthode de discrimination selon la revendication 1, **caractérisée en ce qu'**une onde laser (We) étant émise, de vecteur de Stokes associé

$$S_1 = \begin{pmatrix} a_1 \\ a_2 \\ a_3 \\ a_4 \end{pmatrix},$$

l'analyse de la polarisation de l'onde rétrodiffusée (Wr) est réalisée de telle sorte que les intensités lumineuses $I_1$ et $I_2$ sont respectivement, à un facteur scalaire près, les produits scalaires avec le vecteur de Stokes $S_1r$ de l'onde rétrodiffusée, des vecteurs $V_1$ et $V_2$ suivants :

$$V_1 = \begin{pmatrix} a_1 \\ a_2 \\ a_3 \\ a_4 \end{pmatrix} \text{et } V_2 = \begin{pmatrix} a_1 \\ -a_2 \\ -a_3 \\ -a_4 \end{pmatrix}$$

3. Méthode de discrimination selon l'une des revendications précédentes, **caractérisée en ce que** la discrimination est faite par comparaison de la valeur mesurée de Dp(M) à au moins une valeur prédéterminée.

4. Méthode de discrimination selon la revendication 3, **caractérisé en ce qu'**une desdites valeurs prédéterminées est d'environ 30%, une mesure de $D_p(M)$ au-delà de cette valeur permettant de distinguer la cible d'un environnement naturel.

5. Méthode de discrimination selon l'une des revendications précédentes, **caractérisé en ce que** la valeur de $D_p(M)$ mesurée est comparée à un ensemble de valeurs de degrés de polarisation d'objets connus, permettant ainsi d'aider à son identification.

6. Dispositif pour la discrimination d'une cible (CIB) par rapport à son environnement mettant en oeuvre une méthode de discrimination selon l'une des revendications précédentes, **caractérisé en ce qu'**il comprend :

- des moyens d'émission (ME) de ladite onde polarisée (We) comprenant notamment une source laser (LAS)

et un générateur d'état de polarisation (PSG),

- des moyens de réception (MR) de l'onde rétrodiffusée, comprenant notamment un analyseur d'état de polarisation (PSA) selon deux axes perpendiculaires de l'onde rétrodiffusée (Wr) et des moyens de détection (MDET), ledit analyseur donnant de l'onde rétrodiffusée deux signaux lumineux ($Wr_1$, $Wr_2$) détectés par desdits moyens de détection et d'intensités lumineuses égales auxdites intensités lumineuses $I_1$ et $I_2$,
- des moyens de traitement du signal (TS) permettant de calculer à partir desdites intensités lumineuses le degré de polarisation $D_p(M)$ de la cible.

7. Dispositif selon la revendication 6, **caractérisé en ce que** l'onde issue de la source laser étant polarisée linéairement selon un axe (Oy) donné, perpendiculaire à l'axe de propagation (Oz) de ladite onde, le générateur de polarisation (PSG) comprend une lame à retard ($LO_e$) de type lambda/8 dont l'axe rapide fait sensiblement un angle de -27,8° avec ledit axe (Oy), le sens positif étant le sens trigonométrique, et l'analyseur de polarisation (PSA) comprend une lame à retard ($Lo_r$) de type lambda/8 dont l'axe rapide fait sensiblement un angle de 62,5° avec ledit axe (Oy), ainsi que des moyens de séparation de la polarisation, permettant de générer lesdits signaux lumineux ($Wr_1$, $Wr_2$) qui forment alors deux ondes polarisées linéairement, respectivement selon les axes (Oy) et (Ox) perpendiculaire à (Oy), lesdits signaux ($Wr_1$, $Wr_2$) étant envoyés vers les moyens de détection (MDET) afin de détecter lesdites intensités $I_1$ et $I_2$.

8. Dispositif selon la revendication 7, **caractérisé en ce que** les moyens de détection comprennent deux détecteurs ($DET_1$, $DET_2$) et **en ce que** lesdits moyens de séparation de l'analyseur de polarisation (PSA) comprennent un cube séparateur de polarisation (CSP), permettant d'envoyer vers les deux détecteurs les deux ondes polarisées linéairement ($Wr_1$, $Wr_2$).

9. Dispositif selon l'une des revendications 6 à 8, **caractérisé en ce que** les moyens de détection (MDET) sont de type photodiode.

10. Télémètre laser comprenant un dispositif de discrimination de cible selon l'une des revendications 6 à 9, un détecteur ($DET_3$) recevant une fraction de l'onde émise par lesdits moyens d'émission, les moyens de traitement du signal (TS) recevant en outre le signal ($I_3$) délivré par ledit détecteur ($DET_3$), permettant ainsi de calculer la distance de la cible par mesure du temps d'aller-retour de l'onde émise.

11. Télémètre selon la revendication 10, **caractérisé en ce que** le laser est un laser Erbium impulsionnel de durée d'impulsion de l'ordre de la dizaine de nanosecondes et **en ce que** les moyens de détection sont de type photodiode en InGaAs.

**Patentansprüche**

1. Verfahren zur Unterscheidung eines Ziels von seiner Umgebung, **dadurch gekennzeichnet, dass** es umfasst:

- das Senden einer polarisierten Laserwelle (We) von elliptischer Polarisation zum Ziel, wobei der der gesendeten Welle zugeordnete Stokesvektor bis auf einen Skalarfaktor und bis auf eine Rotationsmatrix um die Fortpflanzungsachse (Oz) der Welle im Wesentlichen folgendermaßen ist:

$$S = \begin{pmatrix} 1 \\ 1/\sqrt{3} \\ 1/\sqrt{3} \\ 1/\sqrt{3} \end{pmatrix}$$

- die Analyse gemäß zwei senkrechten Achsen der Polarisation der vom Ziel rückgestreuten Welle (Wr), was die Erfassung von zwei derartigen Lichtstärken $I_1$ und $I_2$ ermöglicht, dass das Verhältnis $\frac{I_1 - I_2}{I_1 + I_2}$ im Wesentlichen gleich dem Polarisationsgrad $D_p$ (M) des Ziels ist, wobei die Messung von $D_p(M)$ die Unterscheidung des Ziels

von seiner Umgebung ermöglicht.

2. Unterscheidungsverfahren nach Anspruch 1, **dadurch gekennzeichnet, dass** bei einer gesendeten Laserwelle (We) mit zugeordnetem Stokesvektor

$$S_1 = \begin{pmatrix} a_1 \\ a_2 \\ a_3 \\ a_4 \end{pmatrix}$$

die Analyse der Polarisation der rückgestreuten Welle (Wr) so durchgeführt wird, dass die Lichtstärken $I_1$ und $I_2$ bis auf einen Skalarfaktor die Skalarprodukte mit dem Stokesvektor $S_1$r der rückgestreuten Welle der folgenden Vektoren $V_1$ und $V_2$ sind:

$$V_1 = \begin{pmatrix} a_1 \\ a_2 \\ a_3 \\ a_4 \end{pmatrix} \text{ und } V_2 = \begin{pmatrix} a_1 \\ -a_2 \\ -a_3 \\ -a_4 \end{pmatrix}$$

3. Unterscheidungsverfahren nach einem der vorhergehenden Ansprüche, **dadurch gekennzeichnet, dass** die Unterscheidung durch Vergleich des gemessenen Werts von $D_p(M)$ mit mindestens einem vorbestimmten Wert erfolgt.

4. Unterscheidungsverfahren nach Anspruch 3, **dadurch gekennzeichnet, dass** einer der vorbestimmten Werte etwa 30% beträgt, wobei eine Messung von $D_p(M)$ über diesen Wert hinaus es ermöglicht, das Ziel von einer natürlichen Umgebung zu unterscheiden.

5. Unterscheidungsverfahren nach einem der vorhergehenden Ansprüche, **dadurch gekennzeichnet, dass** der gemessene Wert von $D_p(M)$ mit einer Einheit von Werten von Polarisationsgraden bekannter Gegenstände verglichen wird, was es ermöglicht, seine Identifizierung zu unterstützen.

6. Vorrichtung zur Unterscheidung eines Ziels (CIB) von seiner Umgebung, die ein Unterscheidungsverfahren nach einem der vorhergehenden Ansprüche anwendet, **dadurch gekennzeichnet, dass** sie aufweist:

   - Mittel (ME) zum Senden der polarisierten Welle (We), die insbesondere eine Laserquelle (LAS) und einen Polarisationszustandsgenerator (PSG) aufweisen,
   - Mittel (MR) zum Empfang der rückgestreuten Welle, die insbesondere einen Analysator (PSA) des Polarisationszustands der rückgestreuten Welle (Wr) gemäß zwei senkrechten Achsen und Erfassungsmittel (MDET) aufweist, wobei der Analysator von der rückgestreuten Welle zwei Lichtsignale ($Wr_1$, $Wr_2$) ausgibt, die von den Erfassungsmitteln erfaßt werden und deren Lichtstärken gleich den Lichtstärken $I_1$ und $I_2$ sind,
   - Mittel (TS) zur Verarbeitung des Signals, die es ermöglichen, ausgehend von den Lichtstärken den Polarisationsgrad $D_p(M)$ des Ziels zu berechnen.

7. Vorrichtung nach Anspruch 6, **dadurch gekennzeichnet, dass**, da die von der Laserquelle kommende Welle linear gemäß einer gegebenen Achse (Oy) senkrecht zur Fortpflanzungsachse (Oz) der Welle polarisiert ist, der Polarisationsgenerator (PSG) ein Verzögerungsplättchen ($Lo_e$) vom Typ Lambda/8 aufweist, dessen schnelle Achse im Wesentlichen einen Winkel von -27,8° mit der Achse (Oy) bildet, wobei die positive Richtung die trigonometrische Richtung ist, und der Polarisationsanalysator (PSA) ein Verzögerungsplättchen ($Lo_r$) vom Typ Lambda/8, dessen schnelle Achse im Wesentlichen einen Winkel von 62,5° mit der Achse (Oy) bildet, sowie Mittel zur Trennung der Polarisation aufweist, die es ermöglichen, die Lichtsignale ($Wr_1$, $Wr_2$) zu erzeugen, die dann zwei linear

polarisierte Wellen gemäß den Achsen (Oy) bzw. (Ox) senkrecht zu (Oy) bilden, wobei die Signale ($Wr_1$, $Wr_2$) zu den Erfassungsmitteln (MDET) geschickt werden, um die Lichtstärken ($I_1$, $I_2$) zu erfassen.

**8.** Vorrichtung nach Anspruch 7, **dadurch gekennzeichnet, dass** die Erfassungsmittel zwei Detektoren ($DET_1$, $DET_2$) enthalten, und dass die Trennmittel des Polarisationsanalystors (PSA) einen Polarisationstrennwürfel (CSP) aufweisen, der es ermöglicht, die beiden linear polarisierten Wellen ($Wr_1$, $Wr_2$) zu den beiden Detektoren zu schicken.

**9.** Vorrichtung nach einem der Ansprüche 6 bis 8, **dadurch gekennzeichnet, dass** die Erfassungsmittel (MDET) vom Typ Photodiode sind.

**10.** Lasertelemeter, der eine Zielunterscheidungsvorrichtung nach einem der Ansprüche 6 bis 9 aufweist, wobei ein Detektor ($DET_3$) einen Bruchteil der von den Sendemitteln gesendeten Welle empfängt, wobei die Mittel (TS) zur Verarbeitung des Signals außerdem das vom Detektor ($DET_3$) gelieferte Signal ($I_3$) empfangen, wodurch die Entfernung des Ziels durch Messung der Reflexionszeit der gesendeten Welle berechnet werden kann.

**11.** Telemeter nach Anspruch 10, **dadurch gekennzeichnet, dass** der Laser ein Erbium-Impulslaser ist, dessen Impulsdauer in der Größenordnung von zehn Nanosekunden liegt, und dass die Erfassungsmittel vom Typ InGaAs-Photodiode sind.

## Claims

**1.** Method of discriminating a target relative to its surroundings, **characterized in that** it comprises:

- the transmission towards the said target of a polarized laser wave ($W_t$), of elliptical polarization, the Stokes vector associated with the transmitted wave being substantially the following:

$$S = \begin{pmatrix} 1 \\ 1/\sqrt{3} \\ 1/\sqrt{3} \\ 1/\sqrt{3} \end{pmatrix}$$

  to within a scalar factor, and to within a rotation matrix for rotation about the propagation axis (Oz) of the wave;
- analysis along two perpendicular axes of the polarization of the said wave ($W_b$) backscattered by the target, allowing detection of two light intensities $I_1$ and $I_2$ such that the ratio $\frac{I_1 - I_2}{I_1 + I_2}$ is substantially equal to the degree of polarization $D_p(M)$ of the said target, the measurement of $D_p(M)$ making it possible to discriminate the target relative to its surroundings.

**2.** Method of discrimination according to claim 1, **characterized in that**, with a laser wave ($W_t$) of associated Stokes vector:

$$S_1 = \begin{pmatrix} a_1 \\ a_2 \\ a_3 \\ a_4 \end{pmatrix}$$

being transmitted, the polarization of the backscattered wave ($W_b$) is analyzed in such a way that the light intensities $I_1$ and $I_2$ are respectively, to within a scalar factor, the scalar products of the following vectors $V_1$ and $V_2$:

$$V_1 = \begin{pmatrix} a_1 \\ a_2 \\ a_3 \\ a_4 \end{pmatrix} \text{ and } V_2 = \begin{pmatrix} a_1 \\ -a_2 \\ -a_3 \\ -a_4 \end{pmatrix}$$

with the Stokes vector $S_{1b}$ of the backscattered wave.

**3.** Method of discrimination according to either of the preceding claims, **characterized in that** the discrimination is made by comparing the measured value of $D_p(M)$ with at least one predetermined value.

**4.** Method of discrimination according to Claim 3, **characterized in that** one of the said predetermined values is about 30%, a measurement of $D_p(M)$ above this value allowing the target to be distinguished from a natural environment.

**5.** Method of discrimination according to one of the preceding claims, **characterized in that** the measured value of $D_p(M)$ is compared with a set of values of the degrees of polarization of known objects, thus making it possible to help to identify it.

**6.** Device for discriminating a target (TAR) relative to its surroundings using a method of discrimination according to one of the preceding claims, **characterized in that** it comprises:

- means (TM) for transmitting the said polarized wave ($W_t$), comprising in particular a laser source (LAS) and a polarization state generator (PSG);
- means (RM) for receiving the backscattered wave, comprising in particular a polarization state analyzer (PSA) according to two perpendicular axes of the backscattered wave ($W_b$) and detection means (DETM), the said analyzer giving, from the backscattered wave, two light signals ($W_{b1}$, $W_{b2}$) that are detected by the said detection means and have light intensities equal to the said light intensities $I_1$ and $I_2$; and
- signal processing means (SP) for calculating the degree of polarization $D_p(M)$ of the target from the said light intensities.

**7.** Device according to Claim 6, **characterized in that**, since the wave output by the laser source is linearly polarized along a given axis (Oy) perpendicular to the axis of propagation (Oz) of the the said wave, the polarization generator (PSG) comprises a retardation plate ($LO_t$) of the $\lambda/8$ type, the fast axis of which makes substantially an angle of -27.8° with the said axis (Oy), the positive direction being the anticlockwise direction, and the polarization analyzer (PSA) comprises a retardation plate ($LO_b$) of the $\lambda/8$ type, the fast axis of which makes substantially an angle of 62.5° with the said axis (Oy), and also polarization splitting means for generating the said light signals ($W_{b1}$, $W_{b2}$) that then form two linearly polarized waves, respectively along the (Oy) and (Ox) axes perpendicular to (Oy), the said signals ($W_{b1}$, $W_{b2}$) being sent to the detection means (DETM) so as to detect the said intensities $I_1$ and $I_2$.

**8.** Device according to Claim 7, **characterized in that** the detection means comprise two detectors ($DET_1$, $DET_2$) and **in that** the said splitting means of the polarization analyzer (PSA) comprise a polarization splitter cube (PSC) for sending the two linearly polarized waves ($W_{b1}$, $W_{b2}$) to the two detectors.

**9.** Device according to one of Claims 6 to 8, **characterized in that** the detection means (DETM) are of the photodiode type.

**10.** Laser telemeter comprising a target discrimination device according to one of Claims 6 to 9, a detector ($DET_3$) receiving a fraction of the wave transmitted by the said transmission means, the signal processing means (SP) furthermore receiving the signal ($I_3$) delivered by the said detector ($DET_3$), thus allowing the distance of the target to be calculated by measuring the round-trip time of the transmitted wave.

**11.** Telemeter according to Claim 10, **characterized in that** the laser is a pulsed erbium laser with a pulse duration of the order of ten nanoseconds and **in that** the detection means are of the InGaAs photodiode type.

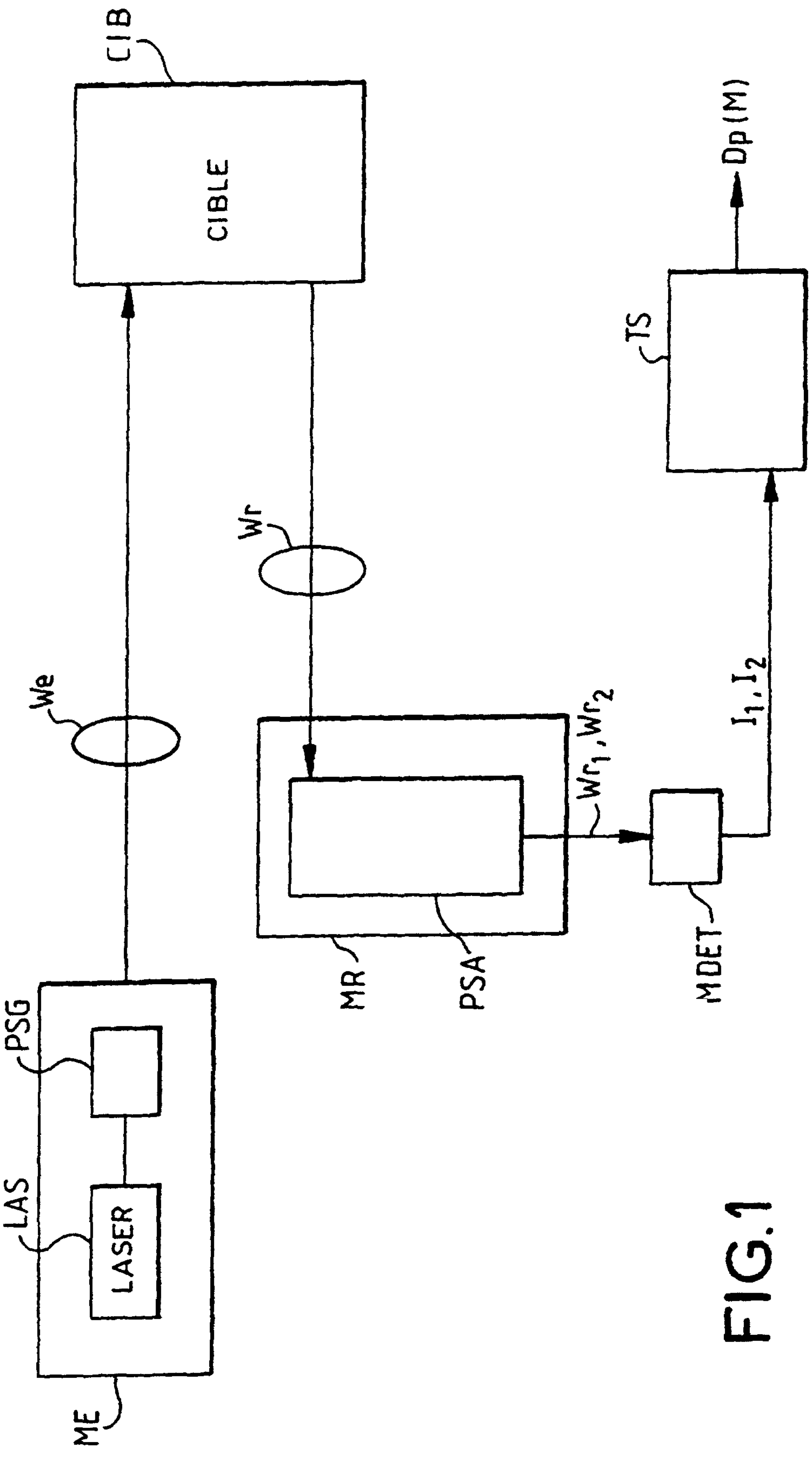


FIG.1

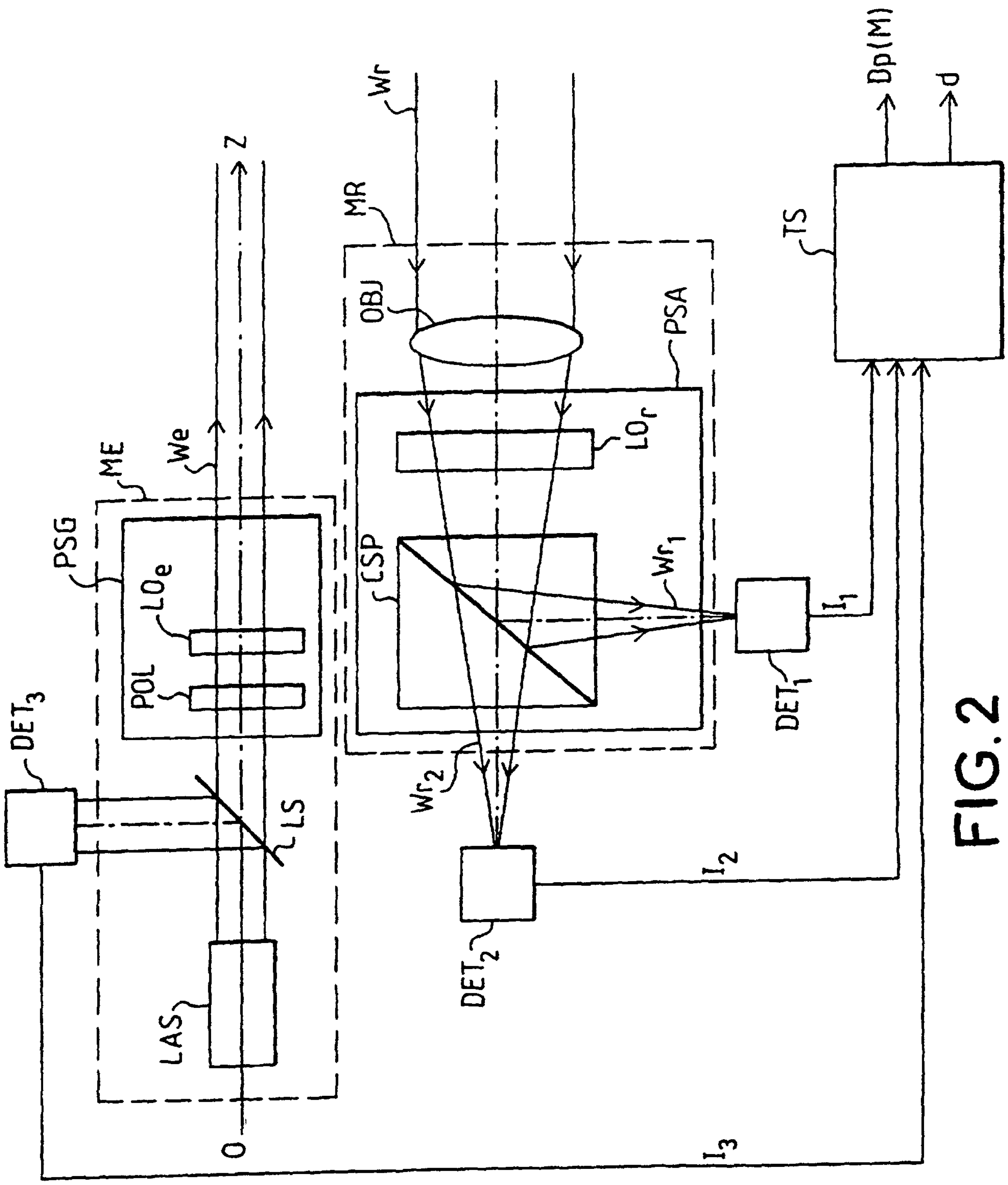
Dp(M)
d
Wr
Z
MR
OBJ
PSA
TS
LOr
ME
We
PSG
LOe
POL
CSP
Wr1
DET1
I1
DET3
LS
Wr2
DET2
LAS
I2
O
I3

FIG. 2

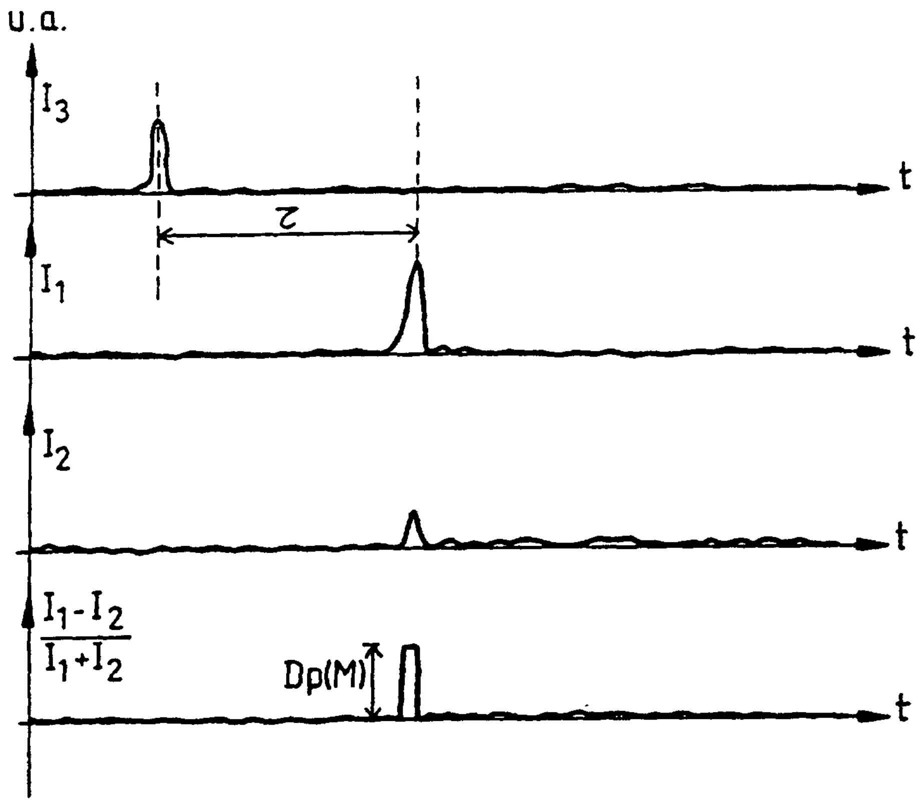


FIG.3